# EUROPEAN PATENT APPLICATION

(11) **EP 4 570 344 A1**
(43) Date of publication of application: **18.06.2025**
(21) Application number: 24213436.9
(22) Date of filing: 15.11.2024
(51) Int. Cl.: B01D 29/23, B01D 29/64, B01D 35/02, D06F 39/10

(54) **FILTER FOR AN APPLIANCE FOR WASHING LAUNDRY OR TEXTILE ARTICLES**

(30) Priority: 11.12.2023 IT 202300026373
(71) Applicant: Electrolux Appliances Aktiebolag, 105 45 Stockholm (SE)
(72) Inventor: LEONE, Carlo Antonio, 33080 Porcia (PN) (IT); CASAGRANDE, Stefano, 33080 Porcia (PN) (IT); BRUNO, Giacomo, 33080 Porcia (PN) (IT); MARIUZZO, Marco, 33080 Porcia (PN) (IT)
(74) Representative: Electrolux Group Patents

(57) **Abstract**

A filter assembly **(100)** is proposed, for filtering a fluid used in an appliance **(200)** for washing laundry or textile articles. The filter assembly comprises: a filtering element **(105)** comprising a filtering surface and enclosing an inlet chamber **(110)** adapted to receive said fluid, the inlet chamber comprising a first inlet chamber portion (**110**_{M}) associated with a first filtering surface portion of the filtering surface, and a second inlet chamber portion (**110_{A}**) in selective fluid separation from the first inlet chamber portion and associated with a second filtering surface portion of the filtering surface; a housing **(115)** adapted to house the filtering element; an outlet chamber **(120)** defined by a volume between the filtering element and the housing for receiving the filtered fluid resulting from the passage of the fluid from the inlet chamber through the filtering surface of the filtering element; an inlet **(IN)** in fluid connection with said first inlet chamber portion, through which fluid is supplied to the first inlet chamber portion; an outlet **(OUT)** in fluid connection with said outlet chamber, through which filtered fluid exits the outlet chamber; a scraper device **(150)** operable to rotate about a rotation axis **(R)** to remove filtered contaminants from said first filtering surface portion during rotation of the scraper device, and to move the removed filtered contaminants away from the first inlet chamber portion; a collection region (**130_{R}**) for collecting the removed filtered contaminants and moved away from the first inlet chamber portion; and a fluid connection device **(170)** for selectively enabling and disabling a fluid connection between the first and second inlet chamber portions. The scraper device is movable relative to the filtering element along the rotation axis from a rest position to a shifted position as a result of a pushing action exerted on the scraper device by the collected filtered contaminants. The fluid connection device is movable together with the scraper device and is configured to enable said fluid connection when the scraper device is in the shifted position, allowing fluid to flow from the inlet to the second inlet chamber portion through the first inlet chamber portion and to be filtered by the second filtering surface portion, and to disable said fluid connection when the scraper device is in the rest position, causing fluid separation between the first and second inlet chamber portions and allowing fluid to be filtered by the first filtering surface portion.

## Description

### Background of the present invention

### Field of the present invention

The present invention generally relates to the field of laundry or textile washing appliances, and in particular to a filter assembly for filtering out contaminants from a fluid used by a laundry or textile washing appliance. The invention also relates to a laundry or textile washing appliance provided with the filter assembly and to a method for operating the filter assembly.

### Overview of related technique

Different types of equipment for washing laundry or textile articles, both for domestic and professional applications, use one or more fluids during their operation.

Referring for example to household appliances for washing textile articles (e.g. clothes), such as washing machines or washer-dryers for washing and drying laundry, such fluids may include water and/or water mixed with chemical treatment agents for the textile articles, such as detergents, fabric softeners, dyes, stain removers, and so on.

It is known to equip such appliances with special filtering devices or filter assemblies designed to filter out from the fluid contaminants including unwanted materials present in the fluid. Examples of contaminants include foreign bodies, such as coins, gravel, metal elements, buttons, hair, which were among the textile products at the start of the treatment, and/or elements, such as filaments, fluff, etc., which make up the textile products themselves and which detach from them during the treatment operations performed by the appliance.

The contaminants may compromise the correct execution of the treatment operations, for example if the fluid containing contaminants were recirculated in the appliance, and/or may have a significant environmental impact, for example if the fluid containing contaminants were discharged from the appliance into a sewage system. Among the contaminants released by textile products, especially those of a synthetic nature, having a very significant environmental impact, for example, the so-called "microplastics" can be identified, i.e. particles of plastic material with dimensions ranging from a few millimetres to a few microns. As known, pollution by microplastics is considered a threat to the ecosystem and to human and animal health.

Known filter assemblies comprise a cylindrical filter element with filtering walls and a filter housing enclosing the filtering element. Fluid from an inlet port of the filter assembly is forced into a volume enclosed by the filtering element and reaches a volume of the filter assembly between the filter housing and the filtering element by passing through the filtering walls of the filtering element. The filtering walls of the filtering element are configured to retain contaminants having a size greater than a predefined size. In this way, the filtered contaminants remain within the volume enclosed by the filtering element, and the fluid reaching the volume between the filter housing and the filtering element is free of the filtered contaminants. The filtered fluid is then allowed to flow out of the filter assembly through an outlet port.

With the use of the filter assembly, the filtering walls of the filtering element become dirty, clogged with the contaminants retained, and therefore the effectiveness of the filter assembly can be compromised. In the case of excessive clogging that no longer allows the fluid to pass through the filtering walls, the filter assembly can no longer function, and can even be damaged due to the overpressures that are generated in the filter housing and in the filtering element itself due to the clogging of the filtering walls.

For this reason, it is known to perform cleaning operations aimed at removing contaminants from the filtering walls of the filtering element.

EP4115966A1 shows a filtering system for a household appliance comprising a filter with a filtering surface for filtering particles from a fluid, a cleaning element, and a cleaning element actuating device for moving the cleaning device with a translational and rotational motion relative to the filtering surface.

### Summary of the present invention

The Applicant observed that the solutions known in the art are not efficient, presenting drawbacks.

In particular, in the filtering system shown in EP4115966A1, the particles removed from the filtering surfaces by the action of the cleaning element are progressively accumulated inside the filter. If the user does not frequently open the filtering system to inspect the amount of particles accumulated inside the filter to decide whether to empty the filter or not, the amount of particles accumulated inside the filter could compromise the operation of the cleaning element and/or the overall operation of the filtering system, causing the inability for the fluid to be filtered to flow through the filter, thus causing a blockage of the hydraulic circuit to which the filtering system is connected.

In view of the above, the Applicant has designed a filter assembly that is not affected by the above-mentioned drawbacks.

One or more aspects of the present invention are set forth in the independent claims, with advantageous features of the same invention being indicated in the dependent claims, the wording of which is incorporated herein by reference.

One aspect of the present invention relates to a filter assembly for filtering a fluid used in an appliance for washing laundry or textile articles.

The filter assembly includes a filtering element.

The filtering element comprises a filtering surface and encloses an inlet chamber adapted to receive said fluid.

The inlet chamber comprises a first inlet chamber portion associated with a first filtering surface portion of the filtering surface, and a second inlet chamber portion selectively fluidly separated from the first inlet chamber portion and associated with a second filtering surface portion of the filtering surface. The partition of the inlet chamber into two or more portions allows the selective use of different portions of the filtering surface of the filtering element for the filtration of the fluid to be filtered, thus managing the overall degree of clogging of the entire filtering element.

The filter assembly comprises a housing adapted to house the filtering element.

The filter assembly comprises an outlet chamber defined by a volume between the filtering element and the housing for receiving the filtered fluid resulting from the passage of the fluid from the inlet chamber through the filtering surface of the filtering element (e.g., through the first filtering surface portion and/or the second filtering surface portion, depending on the operating conditions of the filter assembly).

The filter assembly comprises an inlet fluidly connected to said first inlet chamber portion, through which fluid is supplied to said first inlet chamber portion.

The filter assembly comprises an outlet fluidly connected with said outlet chamber, through which the filtered fluid exits the outlet chamber.

The filter assembly comprises a scraper device operable to rotate about a rotation axis for removing filtered contaminants from said first filtering surface portion during rotation of the scraper device, and to move the removed filtered contaminants away from said first inlet chamber portion.

The filter assembly includes a collection region for collecting the filtered contaminants removed and moved away from the first inlet chamber portion. The collection, within the collection region, of the filtered contaminants removed and moved away from the first inlet chamber portion allows avoiding the dispersion of the contaminants inside the inlet chamber and, consequently, redeposits of the same on the filtering surface, in particular on the first filtering surface portion.

The filter assembly includes a fluid connection device for selectively enabling and disabling a fluid connection between the first and second inlet chamber portions.

The scraper device is movable relative to the filtering element along the rotation axis from a rest position to a shifted position as a result of a pushing action exerted on the scraper device by the collected filtered contaminants. The pushing action exerted on the scraper device by the collected filtered contaminants in the collection region allows the displacement or shift of the scraper device along the rotation axis to be related to the amount of contaminants present in the collection region.

The fluid connection device is movable together with the scraper device and is configured to:
- enable said fluid connection when the scraper device is in the shifted position, allowing the fluid to flow from the inlet to the second inlet chamber portion through the first inlet chamber portion and to be filtered by the second filtering surface portion, and
- disable said fluid connection when the scraper device is in the rest position, causing a fluid separation between the first and second inlet chamber portions and allowing the fluid to be filtered by the first filtering surface portion.

According to an embodiment, in the shifted position of the scraper device the fluid can be filtered by the second filtering surface portion and, as long as the first filtering surface portion is not clogged, by the first filtering surface portion.

According to an embodiment, the second inlet chamber portion can receive the fluid to be filtered from the inlet of the filter assembly only when the fluid connection between the first and second inlet chamber portions is enabled. This allows precisely controlling which portion of the inlet chamber should be affected by the inlet of the fluid to be filtered. Furthermore, in this way the fluid connection between the first and second inlet chamber portions can be established when the first inlet chamber portion and/or the filtering surface that encloses it (i.e., the first filtering surface portion) and/or the collection region exhibit an anomalous operating situation. In particular, in the event that the excessive accumulation of contaminants in the collection region also causes a reduced or null filtration efficiency of the first filtering surface portion, such filtration efficiency can be at least temporarily restored in a complete manner by assigning or relegating the task of carrying out the filtration process to the second filtering surface portion.

According to an embodiment, the scraper device is located only in the first inlet chamber portion. In this way, only one portion of the filtering surface of the filtering element (i.e., the first filtering surface portion) will be continuously cleaned by the scraper device, while a different portion of the filtering surface (i.e., the second filtering surface portion) can be used for occasional filtering of the fluid to be filtered.

According to an embodiment, the scraper device comprises an endless screw. Advantageously, an endless screw allows for effectively cleaning the scraped surface and allows for a thrust force to be applied to the material removed from the scraped surface in a preferred direction and sense.

In an embodiment, the endless screw comprises a shaft and a helical body surrounding the shaft.

According to an embodiment, the helical body comprises a blade.

In a further embodiment, as an alternative to or in addition to a blade, the scraper device may be provided with brush elements that interact mechanically with the first filtering surface portion.

According to an embodiment, the helical body is configured to mechanically interact with the first filtering surface portion.

According to an embodiment, the rotation axis of the scraper device is substantially parallel to the filtering surface. Thanks to this configuration, the movement of the scraper device allows for effectively cleaning the first portion of the filtering surface by removing and displacing the filtered contaminants.

According to an embodiment, under operating conditions, the rotation axis of the scraper device is parallel to a direction of a prevailing extension dimension of the inlet chamber.

According to an embodiment, a scraper device is provided which, when mounted in the filter assembly and in the condition in which the collection region is empty, that is, it does not contain contaminants, extends inside the collection region for a length, measured along the rotation axis, between 1 mm and 10 mm, preferably between 1 mm and 5 mm.

According to an embodiment, a scraper device is provided which, when mounted in the filter assembly and in the condition in which the collection region is empty, that is, it does not contain contaminants, occupies a volume within the collection region between 5% and 25% of the volume of the collection region, preferably between 5% and 15% of the volume of the collection region, more preferably between 5% and 10% of the volume of the collection region.

The different size ranges or percentage ranges defined above for the linear penetration of the scraper device into the collection region or for the percentage of volume occupancy of the collection region by the scraper device may be applied based on the desired sensitivity to the displacement of the scraper device due to filling of the collection region. In embodiments that provide for the use of systems for detecting the displacement or translation of the scraper device along its rotation axis caused by the accumulation of contaminants in the collection region, the different size or percentage ranges defined above for the linear penetration of the scraper device into the collection region or for the percentage of volume occupancy of the collection region by the scraper device may be applied based on a desired detection sensitivity of the detection systems.

According to an exemplary embodiment, the direction of the prevailing extension dimension of the inlet chamber is a vertical direction or a horizontal direction relative to a ground plane.

According to an embodiment, the filter assembly includes a separation wall for separating the first and second inlet chamber portions from each other.

In an embodiment, the filter assembly includes an aperture formed in the separation wall, the fluid connection device being configured to close the aperture when the scraper device is in the rest position and to open the aperture when the scraper device is in the shifted position.

In an embodiment, the shaft is movable along the rotation axis passing through the aperture.

According to an embodiment, the fluid connection device comprises, or is formed by, a portion that enlarges the shaft. In other words, a portion of the fluid connection device increases the radial dimension of the shaft of the scraper device. In this way, the scraper device, and in particular the shaft of the scraper device, itself acts as a fluid connection device: this allows for greater construction simplicity and greater operating efficiency, since the fluid connection device, being perfectly integral with the shaft of the scraper device, does not cause delays in enabling and disabling the fluid connection.

According to an embodiment, the fluid connection device is configured to fit into the aperture when the scraper device is in the rest position.

According to an embodiment, the fluid connection device includes a sealing member for sealing the aperture when the scraper device is in the rest position. This allows the first inlet chamber portion to be perfectly isolated from the second inlet chamber portion under normal operating conditions, preserving the integrity and filtration efficiency of the second filtering surface portion until its use is actually required.

According to an embodiment, the sealing element comprises a gasket.

According to an embodiment, the filter assembly includes a pushing element configured to contrast the pushing action of the contaminants accumulated in the collection region on the scraper device. The pushing element allows the scraper device to be returned to the rest position when the collected filtered contaminants are removed from the collection region.

According to an exemplary embodiment, the pushing element comprises an elastically deformable element, such as a spring.

According to an embodiment, as the scraper device rotates, the scraper device moves the removed filtered contaminants away from the first inlet chamber portion in a first direction along the rotation axis.

According to an embodiment, the scraper device is configured to compact the removed filtered contaminants in the collection region by pressing the removed filtered contaminants into the collection region along the rotation axis (i.e., along a direction parallel to the rotation axis) in the first direction during rotation of the scraper device. The removal of the filtered contaminants and their movement in the first direction helps to keep the first filtering surface portion clean for a long time, preventing the redeposit of the removed filtered contaminants on the first filtering surface portion.

According to an embodiment, the pushing action is exerted along the rotation axis in a second direction opposite to the first direction.

According to an embodiment, the filter assembly comprises an electric motor configured to rotate the scraper device around the rotation axis. The presence of an electric motor allows the scraper device to be operated based on one or more operating parameters of the filter assembly and/or of a laundry or textile articles washing appliance to which the filter assembly is hydraulically connected.

According to an embodiment, the filter assembly comprises one or more guide elements for guiding the movement of the scraper device along the rotation axis. The guide elements allow the scraper device to be maintained in the correct position relative to the filtering surface during its movement along the rotation axis.

According to an embodiment, the guide elements extend along the rotation axis.

According to an embodiment, the guide elements are configured to slideably engage the scraper device to permit movement of the scraper device relative to the inlet chamber, particularly the first inlet chamber portion, along the rotation axis.

According to an embodiment, the filter assembly comprises a bypass chamber separated from the inlet chamber and fluidly connected to the outlet chamber.

According to an embodiment, the filter assembly comprises a fluid communication device configured to enable a fluid communication between the second inlet chamber portion and the bypass chamber in presence of a clogging of the second filtering surface portion, thereby allowing unfiltered fluid to pass through the first and second inlet chamber portions to flow toward said outlet. In this way, in the event that the fluid to be filtered cannot pass through the filtering element (i.e., neither through the first filtering surface portion nor through the second filtering surface portion), for example, because the latter is permanently clogged, the fluid entering the filter assembly can be evacuated without filtration, thus avoiding possible damage to the components of the filter assembly.

According to an embodiment, the fluid communication device comprises a movable body. This allows for rapid and direct enabling of fluid communication between the second inlet chamber portion and the bypass chamber in the presence of clogging of the second filtering surface portion.

According to an embodiment, at least one of the first and second filtering surface portions comprises a mesh having a size configured to retain particles having a minimum size of between 0.1 µm and 5 mm, preferably a minimum size of between 10 µm and 100 µm, more preferably a minimum size of between 10 µm and 75 µm. Thanks to this mesh size, portions of fabric, in particular synthetic fabric, which should be released into the fluid during a treatment, for example a washing process, would be retained in the filtering element and not discharged downstream thereof with the flow of fluid exiting the appliance.

According to an embodiment, the filter assembly includes a sensing system.

According to one embodiment, the sensing system includes a sensing device configured to sense the enabling or disabling of the fluid connection (i.e., the fluid connection between the first inlet chamber portion and the second inlet chamber portion). According to an embodiment, such sensing device includes a position sensing device configured to sense the position of the scraper device along the rotation axis, and to generate a corresponding position signal (analog or digital) indicative of the sensed position and, thus, the enabling or disabling of the fluid connection.

According to an embodiment, the sensing system comprises a sensing device configured to sense the enabling or disabling of the fluid communication, i.e., the fluid connection between the second inlet chamber portion and the bypass chamber. According to an embodiment, such sensing device comprises a position sensing device configured to sense the position of the movable body, and to generate a corresponding position signal (analog or digital) indicative of the sensed position and, thus, the enabling or disabling of fluid communication.

According to an embodiment, the position sensing device may comprise one or more magnetic position sensors, one or more capacitive position sensors, one or more inductive position sensors, one or more optical position sensors, and/or one or more piezoelectric position sensors, and/or one or more devices equipped with encoders or potentiometers.

According to an embodiment, the magnetic position sensor may comprise one or more magnetic elements integral with, or movable together with, the movable component, for example, the scraper device or the movable body, and a fixed sensor element configured to measure the intensity of the magnetic field generated by the magnetic elements and to generate the position signal based on the measured magnetic field strength; the measured generated magnetic field strength can depend on the distance between the magnetic elements and the sensing element, and therefore on the amount of displacement of the moving component compared to its rest position.

According to an embodiment, the filter assembly includes an output system configured to provide output information including fill information relating to a fill state of the collection region.

According to an embodiment, said fill information is provided in response to the sensing system determining whether said fluid connection or said fluid communication is enabled.

According to an embodiment, the output system is configured to provide output information based on the position signal generated by the position sensing device.

According to an embodiment, the output information comprises a quantitative indication of the fill of the collection region, e.g., the volume of contaminants accumulated in the collection region. According to an embodiment, such quantitative indication is calculated, or estimated, based on the extent of translation of the scraper device.

According to an embodiment, the output information comprises a qualitative indication of the filling of the collection region, for example, in terms of predefined levels such as "empty", "half full", "full". According to an embodiment, such qualitative indication is calculated or estimated based on the extent of the shift of the scraper device. A progressive indication of the filling condition of the collection region allows a user to be informed relatively in advance of the occurrence of a complete filling (or of a filling that precludes optimal operation of the filter assembly) of the collection region and to decide whether or not to perform a manual emptying operation of the contaminants from the filter assembly based on the subsequent use of the filtering function of the filter assembly that the user intends to make.

According to an embodiment, the output information includes an indication of the need to empty the collection region.

According to an embodiment, an indication of the need to empty the collection region can be generated when a signal indicative of the sensed position of the scraper device has reached a predefined threshold value. Defining thresholds for the signal indicative of the sensed position of the scraper device is useful and advantageous for discriminating signal values relating to temporary movement conditions of the scraper device during its operation. Such temporary conditions generate fluctuations in the signal that are not representative of the need to empty the collection region and must therefore be discriminated as 'noise' of the signal.

According to an embodiment, the output information may be provided in the form of visual and/or acoustic indications, for example by activating optical and/or acoustic signalling elements, such as warning lights and/or beeps, and/or in the form of text messages and/or symbols displayed on a display element, such as a screen. Visual or acoustic indications help the user to immediately recognize the provided information content of the indication.

According to an embodiment, the output information is provided in the form of a signal (digital or analog) to an external device, such as a smartphone, or a control unit of the appliance. In this way, the output information provided in the form of a signal can be processed and/or used by an algorithm to define a usage recommendation addressed to the user and/or an operating condition of the appliance.

According to an embodiment, the output system is external to the filter assembly.

According to an embodiment, the output system is integrated into the appliance, and is communicatively coupled to the sensing system. For example, the functions of the output system can be performed by the appliance control unit that controls the various operating functions. In this way, the construction of the filter assembly is simplified.

According to an embodiment, the first inlet chamber portion is arranged between the collection region and the second inlet chamber portion.

According to an exemplary embodiment, the collection region is located at one end of the first inlet chamber portion. In this position, collection of filtered contaminants removed from the first filtering surface portion and displaced by the scraper device is facilitated, avoiding dispersion of contaminants along tortuous movement paths.

According to an exemplary embodiment, the collection region may be defined by a filter base that can be selectively associated/de-associated (e.g., removably coupled) with one end of the filtering element. The removability of the filter base allows for easy periodic emptying of the filtered contaminants removed from the filter assembly for proper disposal.

According to an embodiment, the filter base is adapted to be removably coupled to the filtering element, for example at one end thereof, by means of snap connections, bayonet connections, clamping elements (e.g., one or more screws), or threaded coupling elements (e.g., provided on the filter base and/or on the filtering element).

Another aspect of the present invention relates to an appliance for washing laundry or textile articles comprising:
- a control unit configured to control a laundry or textile articles treating operation of the appliance;
- a drain pipe configured to drain fluid from a laundry or textile articles treating chamber into a recirculation conduit to supply said fluid back to the laundry or textile articles treating chamber and/or into a drain outside the equipment;
- a filter assembly, wherein the inlet of the filter assembly is fluid connected to the drain pipe and the outlet of the filter assembly is fluidly connected to the recirculation conduit and/or the drain.

For example, the appliance may be a washing machine configured for the washing treatment only, or a washer-dryer configured for washing and drying laundry or textiles articles.

Another aspect of the present invention relates to a method of operating a filter assembly having one or more of the features set forth above or a combination of one or more of the features set forth above.

The method includes:
- operating the scraper device to be rotated about the rotation axis;
- removing filtered contaminants from the first filtering surface portion during rotation of the scraper device;
- moving the removed filtered contaminants away from the first inlet chamber portion by means of the rotation of the scraper device;
- collecing the removed filtered contaminants moved away from the first inlet chamber portion in the collection region;
- enabling the fluid connection between the first inlet chamber portion and the second inlet chamber portion allowing fluid to flow from the inlet to the second inlet chamber portion through the first inlet chamber portion and to be filtered by the second filtering surface portion, said enabling being caused by the displacement of the scraper device from the rest position to the shifted position as a result of the pushing action exerted on the scraper device by the collected filtered contaminants.

According to an embodiment, the method may comprise coupling the filter assembly to a laundry or textile articles washing appliance having one or more of the features illustrated above or a combination of one or more of the features illustrated above.

According to an embodiment, said coupling may comprise:
- fluidly connecting the inlet of the filter assembly and the drain pipe of the appliance;
- fluidly connecting the outlet of the filter assembly outlet to a recirculation conduit to supply fluid back to the laundry or textile articles treating chamber and/or connecting the outlet of the filter assembly outlet to a drain outside the appliance;
- communicatively coupling the control unit of the appliance to the filter assembly.

### Brief description of the drawings

The features and advantages of the present invention outlined in the preceding section, as well as other features and advantages, will become apparent from reading the following detailed description of its possible exemplary and non-limiting embodiments. The following description will be better understood by referring, in the reading, to the attached figures, in which:
Figures **1A** and **1B** show isometric views of a filter assembly in accordance with an exemplary embodiment;
Figure **1C** shows an exploded isometric view of the filter assembly of **Figures 1A** and **1B****;**
Figure **1D** shows a front view of the filter assembly of **Figures 1A** and **1B** ;
Figures **1E** and **1F** show sectional views of the filter assembly of **Figures 1A** and **1B** in a first operational condition;
Figure **1G** shows a sectional view of the filter assembly of **Figures 1A** and **1B** in a second operating condition, and
Figure **2** shows in a schematic way an example of the connection of a filter assembly to an appliance for washing laundry or textile articles.

### Detailed description of exemplary and non-limiting embodiments of the present invention

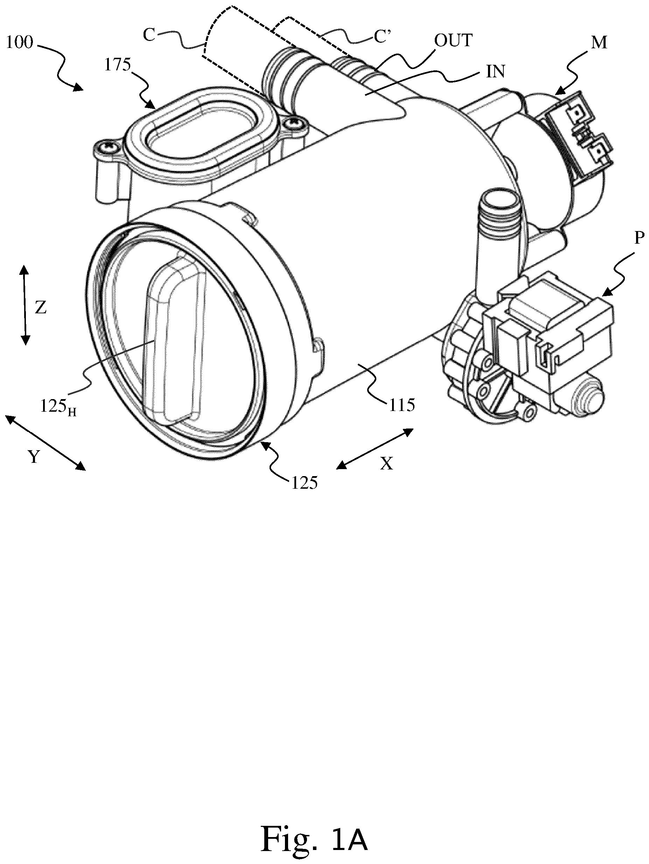

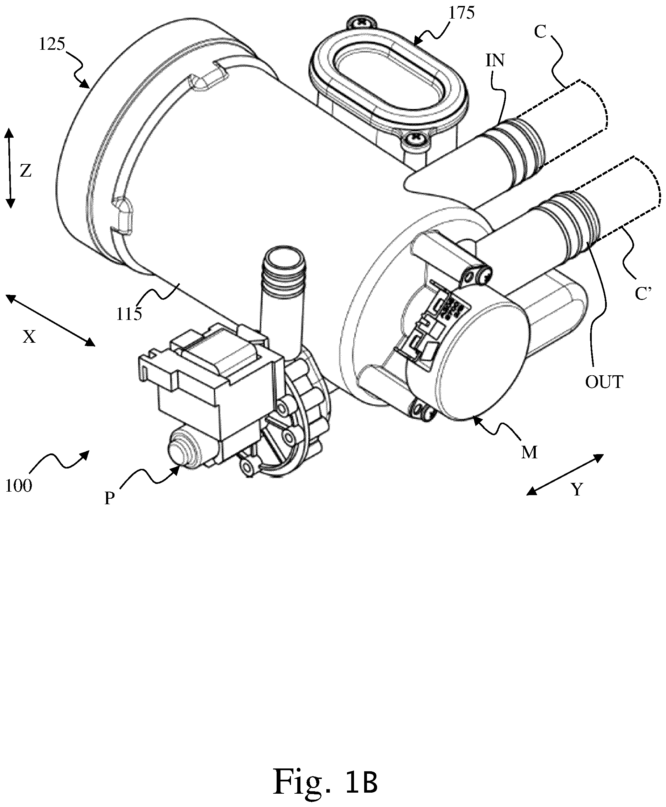

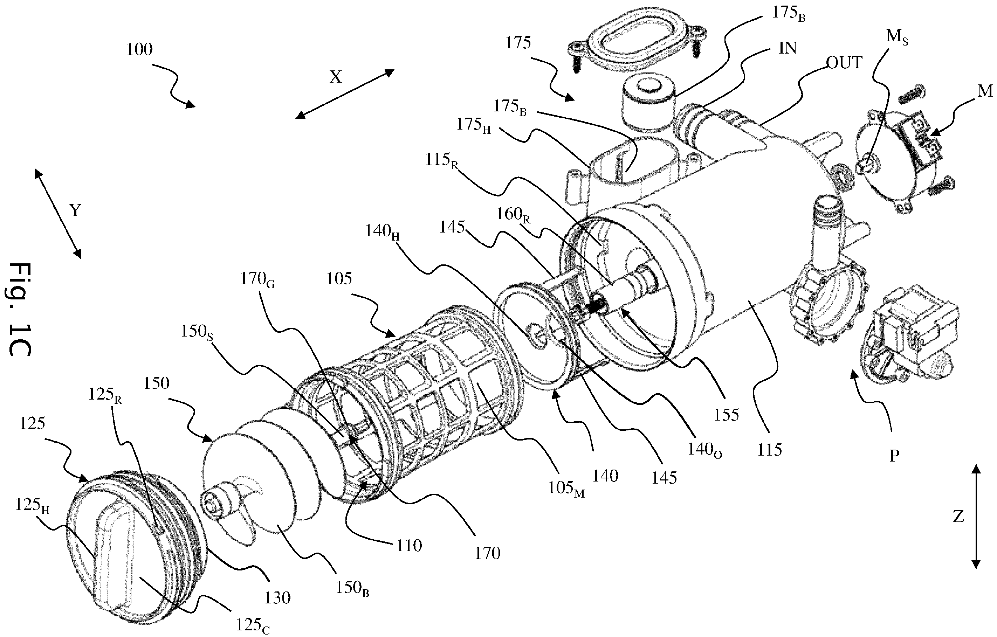

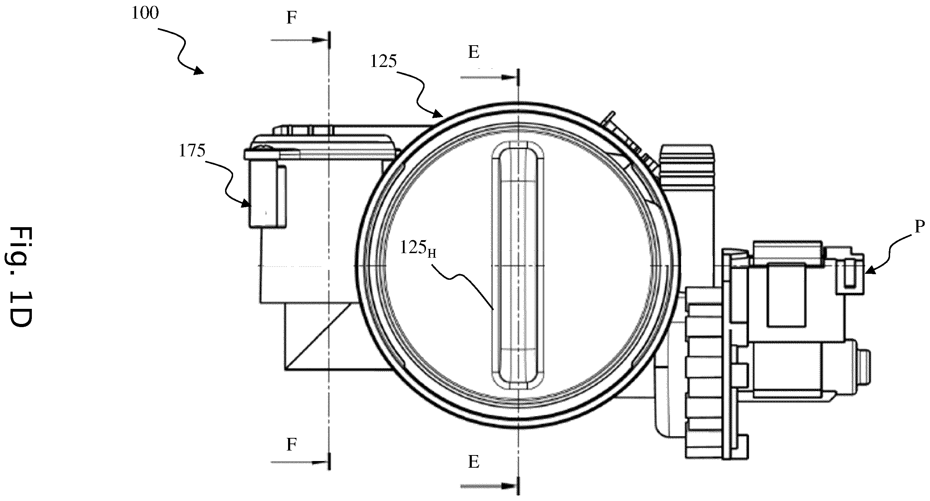

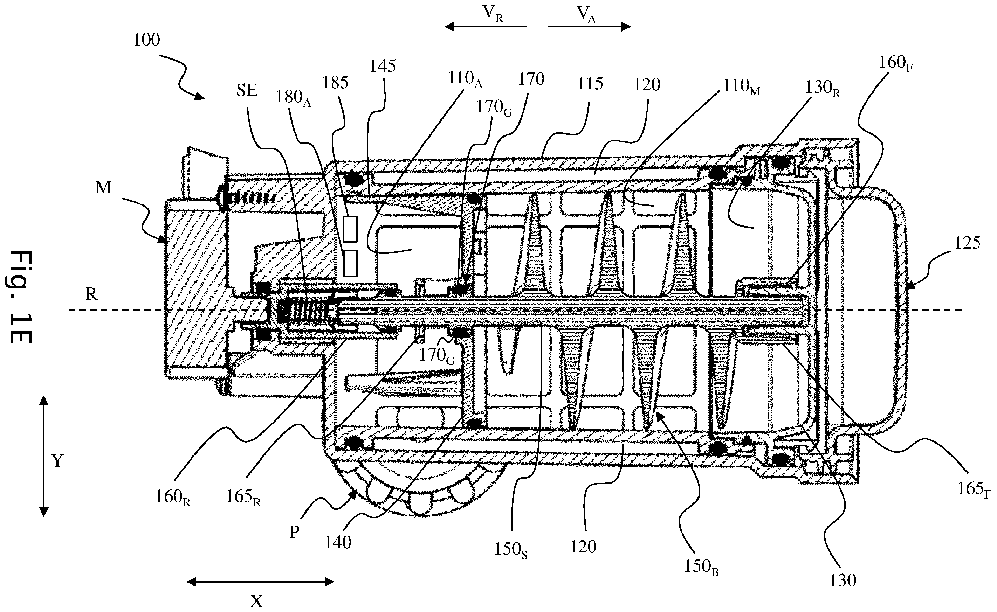

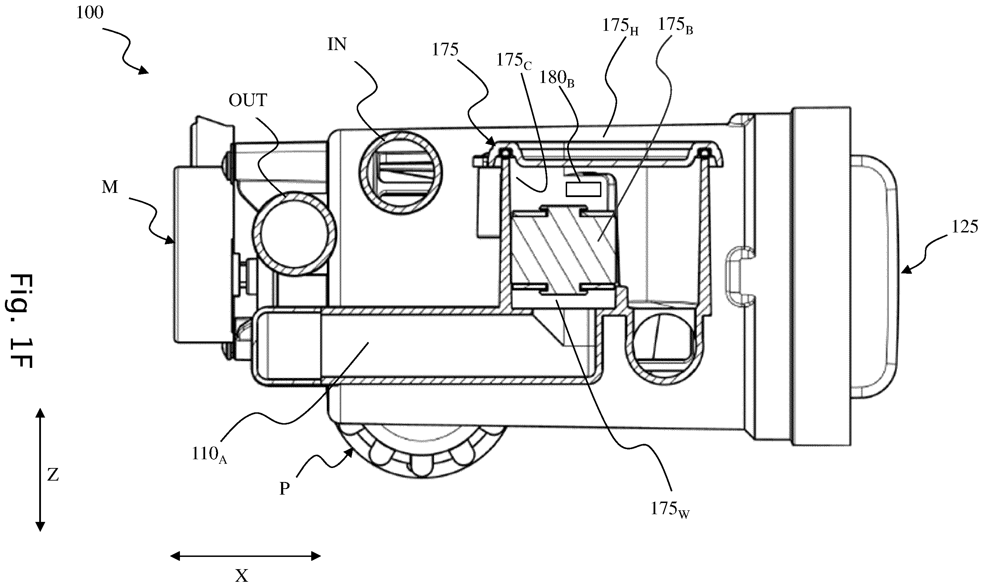

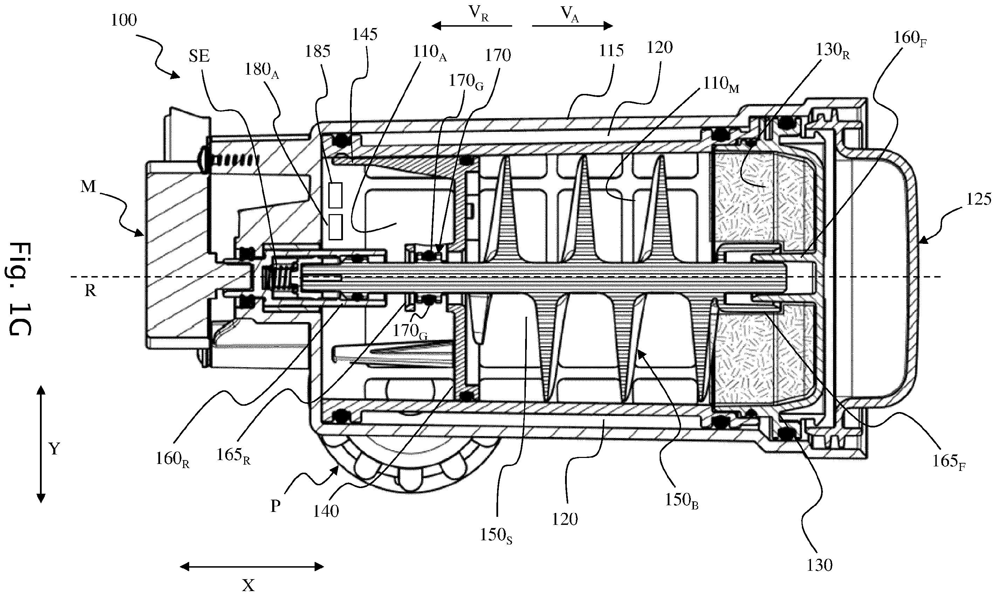

Referring to the drawings, Figures **1A-1G** show a filter assembly **100** in accordance with an exemplary embodiment of the present invention. In particular, Figure **1A** shows a front isometric view of the filter assembly **100,** Figure **1B** shows a rear isometric view of the filter assembly **100,** **Figure 1C** shows an exploded isometric view of the filter assembly **100,** **Figure 1D** shows a front view of the filter assembly **100,** Figures **1E** and **1F** show sectional views of the filter assembly **100** (along the sectional axes **E** - **E** and **F** - **F,** respectively, shown in **Figure 1D****)** in a first operating condition, and Figure **1G** shows a sectional view of the filter assembly **100** (along the sectional axis **E** - **E** shown in **Figure 1D****)** in a second operating condition.

The filter assembly **100** is particularly advantageous when used to filter fluid to be discharged from, or recirculated into, an appliance for washing laundry or textile articles (hereinafter, for brevity, washing appliance), for example for domestic or professional use, such as a washing machine or a washer-dryer.

However, the filter assembly **100** is not intended exclusively for this use. The filter assembly **100** can in fact be conveniently used to filter fluids used by various types of washing appliances.

The filter assembly **100** is particularly advantageous when used to filter a fluid from microplastics contained therein, so as to prevent such microplastics from being recirculated into the washing appliance, and/or from being discharged outside the washing appliance, and therefore into the environment, with consequent significant environmental impact.

However, the filter assembly **100** is not intended solely for filtering fluids from microplastics. The filter assembly **100** can in fact be used to filter different types of contaminants, such as fluff, for example wool and/or cotton microfibers released from textile articles during washing.

In the following, only those components of the filter assembly **100** deemed relevant to understanding the exemplary embodiments discussed will be described.

In the following, directional terminology (e.g., top, bottom, front, rear, center, side) will be used only to describe the filter assembly **100** according to a specific orientation of use thereof, and is therefore in no way to be understood in absolute terms. In particular, the directional terminology used below will refer to the three orthogonal directions **X, Y** , **Z** which identify, respectively, a longitudinal direction, a transverse direction, and a vertical direction.

In the exemplary embodiment, the plane containing the **X** and **Y** directions identifies a support surface, such as a floor, on which a washing appliance, to which the filter unit **100** is associated or can be associated, lies during its operation.

In the exemplary embodiment, the filter assembly **100** includes a filtering element **105.**

In the exemplary embodiment, the filtering element **105** comprises a filtering surface. In the exemplary embodiment, such filtering surface comprises a mesh **105_{M}**, i.e. a wire structure, possibly woven, defining an open weave equipped with uniformly spaced openings.

In the exemplary embodiment, the filtering element **105,** and in particular the mesh **105_{M}**, comprises or is made of a flexible material, so as to allow easy handling during maintenance operations, such as cleaning operations. Without loss of generality, the mesh **105_{M}** may comprise or be made of polyethylene and/or metal material.

In the exemplary embodiment, the mesh **105_{M}** has a size (hereinafter, mesh size) such as to retain particles having a minimum size between 0.1 µm and 5 mm, preferably a minimum size between 10 µm and 100 µm, and more preferably a minimum size between 10 µm and 75 µm. In the exemplary embodiment, the mesh size corresponds to the size of the openings defined by the mesh 105_{M}.

This mesh size allows the filtration, from a treatment or washing fluid, of contaminants smaller than 5 mm, such as microplastic elements, such as, for example, microfilaments that detach from synthetic fabrics during a washing treatment and/or lint, such as, for example, wool and/or cotton microfibres originating from textile articles treated by the washing appliance and contained in the washing fluid.

In the exemplary embodiment, the filtering element 105 includes a frame **105_{F}** (e.g., a rigid or semi-rigid frame) to provide structural strength to the filtering element 105. Without loss of generality, the frame **105_{F}** may be made of plastic or polymeric material, and/or metallic material.

In the exemplary embodiment, the frame **105_{F}** comprises horizontal and vertical frame portions that delimit a plurality of openings that expose respective portions of the mesh **105_{M}.**

In the exemplary embodiment, the filtering element **105** generally has a tubular shape. Therefore, in the exemplary embodiment, the filtering element **105** constitutes a so-called cartridge.

In the exemplary embodiment, the filtering element **105** encloses an inlet chamber **110** adapted to receive (from the washing apparatus) the fluid to be filtered.

In the exemplary embodiment, the inlet chamber **110** substantially corresponds to the internal volume, in particular cylindrical, of the filtering element **105.**

In the exemplary embodiment, a prevailing extension dimension of the inlet chamber **110** extends along the longitudinal direction **X,** or, in other words, the greatest extension of the inlet chamber **110** is along the longitudinal direction **X.** This results in a generally horizontal orientation or development of the filter assembly **100.**

In alternative embodiments, not shown, the prevailing extension dimension of the inlet chamber extends along the vertical direction **Z,** or, in other words, the greatest extension of the inlet chamber is along the vertical direction **Z.** This results in a generally vertical orientation or development of the filter assembly **100.**

In the following, the operating principles, characteristics, variants, and advantages discussed by way of example in relation to the filter assembly with generally horizontal development apply in an equivalent manner, taking into account the necessary changes, to a filter assembly with generally vertical development.

In the exemplary embodiment, the inlet chamber **110** comprises a first inlet chamber portion (hereinafter, main inlet chamber portion) **110_{M}** associated with a first filtering surface portion (of the filtering surface) of the filtering element **105** (hereinafter, main filtering surface portion), and a second inlet chamber portion (hereinafter, auxiliary inlet chamber portion) **110_{A}** associated with a second filtering surface portion (of the filtering surface) of the filtering element **105** (hereinafter, auxiliary filtering surface portion). The main inlet chamber portion **110_{M}** and the auxiliary inlet chamber portion **110_{A}** are visible in **Figures 1E** and **1G****.**

In the exemplary embodiment, the auxiliary inlet chamber portion **110_{A}** is in selective fluid separation from the main inlet chamber portion **110_{M},** as further discussed below.

In the exemplary embodiment, the filter assembly **100** includes a filter housing **115** adapted to house the filtering element **105.**

In the exemplary embodiment, the filter housing **115** has a generally tubular shape, for example a generally cylindrical shape.

In the exemplary embodiment, the filter assembly **100** includes an outlet chamber **120** (visible in **Figures 1E** and **1G****)** defined by a volume between the filtering element **105** and the filter housing **115** when the filtering element **105** is seated in the filter housing **115.**

In the exemplary embodiment, the outlet chamber **120** receives the filtered fluid resulting from the passage of fluid from the inlet chamber **110,** in particular, from the main inlet chamber portion **110_{M}** and/or from the auxiliary inlet chamber portion **110_{A}**, as discussed below, through the filtering element **105,** i.e., through its filtering surface, in particular the main filtering surface portion and/or the auxiliary filtering surface portion, as discussed below.

In the exemplary embodiment considered in which the filtering element **105** and the filter housing **115** have a generally tubular shape, the outlet chamber **120** has a generally hollow cylindrical shape.

In the exemplary embodiment, the filter assembly **100** includes an inlet **IN** (visible in **Figures 1A** and **1B****),** in fluid connection with the main inlet chamber portion **110_{M},** through which fluid is supplied to the main inlet chamber portion **110_{M}**.

In the exemplary embodiment, the inlet **IN** of the filter assembly **100** is adapted to be coupled with a conduit **C** of the washing appliance to receive from the washing appliance the fluid to be filtered. For example, the conduit **C** may be part of a fluid recirculation system of the washing appliance configured to recirculate in the washing appliance the fluid already previously used by the washing appliance, such that the recirculated fluid is reused. Additionally, or alternatively, the conduit **C** may be part of a drain system of the washing appliance configured to discharge the fluid into a drain external to the washing appliance.

In the exemplary embodiment, the filter assembly **100** includes an inlet channel (not visible in the figures) for channeling fluid from the inlet **IN** to the main inlet chamber portion **110_{M}**.

In the exemplary embodiment, the filter assembly **100** includes an outlet **OUT** (visible in **Figures 1A** and **1B****),** in fluid connection with the outlet chamber **120,** and through which the (filtered) fluid exits the outlet chamber **120.**

In the exemplary embodiment, the outlet **OUT** of the filter assembly **100** is adapted to be coupled to a conduit **C'** of the washing appliance to supply the filtered fluid outside of the filter assembly **100.** For example, the conduit **C'** may be part of a fluid recirculation system of the washing apparatus configured to recirculate fluid previously used by the washing appliance back into the washing appliance, thereby reusing the recirculated fluid. Additionally, or alternatively, the conduit **C'** may be part of a drain system of the washing appliance configured to discharge fluid into a drain external to the washing appliance.

In the exemplary embodiment, the filter assembly **100** includes an output channel (not visible in the figure) to convey the filtered fluid from the outlet chamber **120** to the outlet **OUT** of the filter assembly **100.**

In a normal operating condition of the filter assembly **100,** where the auxiliary inlet chamber portion **110_{A}** is in fluid separation from the main inlet chamber portion **110_{M},** the fluid is supplied, in particular through the conduit **C,** the inlet **IN** and the inlet channel, to the main inlet chamber portion **110_{M},** the fluid is filtered passing through the main filtering surface portion of the filtering element **105** and reaches the outlet chamber **120,** after which, through the conduit **C',** the filtered fluid is recirculated in the washing appliance or discharged into a drain external thereto.

In the exemplary embodiment, the filter assembly **100** includes a filter head **125.** In the exemplary embodiment, the filter head **125** is adapted to close, at least partially, the filter housing **115.** In the exemplary embodiment, the filter head **125** is arranged in a front region of the filter assembly **100,** such front region for example representing, in use, a region of the filter assembly **100** visible and accessible from the front by the user for maintenance operations.

In the exemplary embodiment, the filter head **125** comprises a body **125_{B}**.

In the exemplary embodiment, the filter head **125** includes a cover **125c** configured to close the body **125_{B}**.

In the exemplary embodiment, the cover **125C** includes a handle portion **125_{H}** for handling the filter head **125.**

In the exemplary embodiment, the cover **125c** and the body **125_{B}** are made in a single piece. Without losing generality, the cover **125c** and the body **125_{B}** can be coupled together, for example in a removable manner, for example by means of snap connections and/or screws.

In the exemplary embodiment, the filter head **125** and the filter housing **115** can be coupled together by means of a bayonet connection, for example by inserting the body **125_{B}** into the housing **115,** and rotating the filter head **125** around its axis so that retaining elements **125_{R}** of the body **125_{B}** (visible in **Figure 1C****)** and retaining elements **115_{R}** of the housing **115** (visible in **Figure 1C****)** come into contact with each other and corresponding retaining surfaces engage.

In the exemplary embodiment, the filter assembly **100** includes a filter base **130.**

In the exemplary embodiment, the filter base **130** has the shape of a cup (or lid, or cap) that delimits a hollow space.

In the exemplary embodiment, the filter base **130** is adapted to be removably coupled to a front end of the filtering element **105.** For example, the filter base **130** is mateable to the filtering element **105** by snap connections, bayonet connections, or tightening elements such as screws. The filter base **130** may also be mated to the filtering element **105** by threaded coupling elements, preferably provided on both the filter base **130** and the filtering element **105,** to allow the filter base **130** to be screwed onto the filtering element **105.**

In the exemplary embodiment, the filter assembly **100** includes a collection region **130_{R}**. As will be described in more detail below, in the exemplary embodiment, the collection region **130_{R}** acts as a collection region to collect filtered contaminants (e.g., microplastics) removed and moved away from the main filtering surface portion.

In the exemplary embodiment, the collection region **130_{R}** is defined by the coupling between the filter base **130** and the filtering element **105.**

In the exemplary embodiment, the main inlet chamber portion **110_{M}** is arranged between the collection region **130_{R}**, i.e., the filter base **130,** and the auxiliary inlet chamber portion **110_{A}**.

In the exemplary embodiment, the filter base **130** is adapted to be coupled, for example in a fixed or removable manner, to the filter head **125;** in this way, during maintenance operations, the decoupling of the filter head **125** from the filter assembly **100** allows simple and immediate access to the collection region **130_{R}**.

In the exemplary embodiment, the filter assembly comprises **100** a separation wall **140** for separating the main inlet chamber portion **110_{M}** and the auxiliary inlet chamber portion **110_{A}** from each other.

In the exemplary embodiment, the separation wall **140** comprises a disc-shaped plate.

In the exemplary embodiment, the filter assembly **100** comprises one or more (e.g., two) connection elements **145** (visible in **Figure 1C** and, in part, in **Figures 1E** and **1G****)** to mechanically and rigidly connect, i.e., in a firm manner, the separation wall **140** and the filter housing **115.** In alternative embodiments, not shown, the separation wall **140** is made in a single piece with the filtering element **105** or with the filter housing **115;** in such embodiments, the connecting elements **145** can therefore be omitted.

In the exemplary embodiment, the separation wall **140** is made in a single piece with the connecting elements **145.**

In the exemplary embodiment, the separation wall **140** is configured to engage, for example with friction, a vertical frame portion of the filtering element **105,** so that there is no space between them: this allows to obtain a clean and effective subdivision of the inlet chamber **110** into the main inlet chamber portion **110_{M}** and the auxiliary inlet chamber portion **110_{A}**.

In the exemplary embodiment, the separation wall **140** comprises an opening (hereinafter, inlet opening) **140_{O}**, visible in **Figure 1C****,** adapted to receive one end of the inlet channel, for example so as to allow the fluid, which from the inlet IN of the filter assembly **100** passes through the inlet channel, to enter the main inlet chamber portion **110_{M}**.

In the exemplary embodiment, the separation wall 140 comprises an opening (hereinafter, connection opening) **140_{H}**, visible in **Figure 1C****,** adapted to allow a selective fluid connection between the main inlet chamber portion **110_{M}** and the auxiliary inlet chamber portion **110_{A}**, as discussed below.

In the exemplary embodiment, the filter assembly **100** comprises a cleaning system operable to remove filtered contaminants (e.g., microplastics) from the filtering surface, in particular, from the main filtering surface portion of the filtering element **105.**

In the exemplary embodiment, the cleaning system comprises a scraper device **150.**

In the exemplary embodiment, the scraper device **150** is housed in the inlet chamber **110,** specifically in the main inlet chamber portion **110_{M}**.

In the exemplary embodiment, the scraper device **150** is configured to be rotated, relative to the inlet chamber **110,** in particular, relative to the main inlet chamber portion **110_{M},** about a rotation axis **R** parallel to the longitudinal direction **X,** to remove filtered contaminants from the main filtering surface portion during rotation of the scraper device **150,** and to move the removed filtered contaminants away from the main filtering surface portion.

In the exemplary embodiment, the scraper device **150** is configured to mechanically interact with the main filtering surface portion of the filtering element **105,** i.e. with its inner side, in particular with the inner side of the mesh **105_{M}** of the main filtering surface portion, so as to scrape the main filtering surface portion during its rotation. As a result of the scraping action exerted by the rotation of the scraper device **150** within the main inlet chamber portion **110_{M},** contaminants accumulated over time on the main filtering surface portion are removed therefrom.

In the exemplary embodiment, the scraper device **150** is configured to move, i.e., direct or convey or push or guide, the removed contaminants from the main inlet chamber portion **110_{M}** toward the collection region **130_{R}**. In this manner, the removed contaminants are collected in the collection region **130_{R}**. Since the filter base **130** can be removed (or decoupled) from the filtering element 105, the contaminants accumulated in the collection region **130_{R}** can then be easily extracted and properly disposed of, dramatically reducing their environmental impact.

In the exemplary embodiment, the scraper device **150** comprises an endless screw, such as an Archimedean screw, comprising a shaft (hereinafter, screw shaft) **150_{S}** and a helical body **150_{B}**, such as a helical blade, which surrounds the screw shaft **150_{S}** and is integral therewith. In other embodiments, instead of or in addition to a blade, the scraper device **150** may be provided with brush elements that mechanically interact with the main filtering surface portion.

In the exemplary embodiment, the helical body **150_{B}** is configured to mechanically interact with the main filtering surface portion, in particular with an inner side of the main filtering surface portion.

In the exemplary embodiment, the rotation of the scraper device **150** is achieved by rotating the screw shaft **150_{S},** which rotation causes the consequent rotation of the helical body **150_{B}**. The main filtering surface portion of the filtering element **105** is then scraped by the helical body **150_{B}**, in particular by an edge region thereof which, during rotation, mechanically interacts therewith. The contaminants removed from the main filtering surface portion by the scraping action of the helical body **150_{B}** are then guided towards the collection region **130_{R}** by the helical shape of the helical body **150_{B}** during rotation.

In the exemplary embodiment, the filter assembly **100** comprises an electric motor **M** configured to rotatably drive the scraper device **150.**

In the exemplary embodiment, the electric motor **M** is arranged or installed in a rear region of the filter assembly **100;** the front region and the rear region of the filter assembly **100** being for example opposite to each other along the longitudinal direction **X.**

In the exemplary embodiment, the electric motor **M** can be removably coupled to the filter housing **115,** for example by means of snap-fit or bayonet coupling elements or, as exemplarily illustrated, by means of clamping screws.

In the exemplary embodiment, the electric motor **M** comprises a drive shaft **Ms** adapted to be coupled in rotation to the screw shaft **150_{S}** of the scraper device **150.**

In the exemplary embodiment, the drive shaft **Ms** is adapted to be rotatably coupled to the screw shaft **150_{S}** through a transmission mechanism **155.**

In the exemplary embodiment, the scraper device **150** is movable relative to the filtering element **105** along the rotation axis **R** from a rest position (visible in **Figure 1E****)** to a shifted position (visible in **Figure 1G****)** as a result of a pushing action exerted on the scraper device **150** by the filtered contaminants collected (and accumulated in the collection region **130_{R}**).

In the exemplary embodiment, the filter assembly **100** includes one or more guide elements for guiding the movement of the scraper device **150** along the rotation axis **R.**

In the exemplary embodiment, the filter assembly **100** comprises two guide elements **160_{F}**, **160_{R}** (visible in **Figures 1E** and **1G****)** suitable for slidingly engaging, along the rotation axis **R,** respective ends of the scraper device **150.**

In the exemplary embodiment, the filter assembly **100** comprises a front guide member **160_{F}** defining a cylindrical cavity, extending along the rotation axis **R,** adapted to receive a front end of the screw shaft **150_{S}.** In the exemplary embodiment, the front guide member **160_{F}** includes a sleeve arranged in a central portion of the filter base **130.**

In the exemplary embodiment, the filter assembly **100** includes a rear guide member **160_{R}** defining a cylindrical cavity, extending along the rotation axis **R,** adapted to receive a rear end of the screw shaft **150_{S}.** In the exemplary embodiment, the rear guide member **160_{R}** includes a sleeve arranged at the drive mechanism **155.** In the exemplary embodiment, the rear guide member **160_{R}** is arranged within the transmission mechanism **155.**

In the exemplary embodiment, when the front end of the screw shaft **150_{S}** is housed in the front guide member **160_{F}** and the rear end of the screw shaft **150_{S}** is housed in the rear guide member **160_{R},** the scraper device **150** is free to rotate about the rotation axis **R** and at the same time to translate or slide or move along the rotation axis **R.** In the exemplary embodiment, the extensions, along the rotation axis **R,** of the cylindrical cavities defined by the guide members **160_{F}, 160_{R}** are sized so as to prevent the screw shaft **150_{S}** from coming out therefrom during translation.

In the exemplary embodiment, the scraper device **150** is movable with respect to the filtering element **105** along the rotation axis **R** from a rest position (visible in **Figure 1E****),** associated with a normal operating condition of the filter assembly **100,** to a shifted position (visible in **Figure 1G****),** associated with an emergency operating condition, as a result of a pushing action exerted on the scraper device **150** by the filtered contaminants collected and accumulated in the collection region **130_{R}**.

In particular, when the contaminants accumulated in the collection region **130_{R}** are in such an amount as to reach, starting from the bottom of the collection region **130_{R}**, i.e. starting from the bottom surface of the filter base **130,** the front end of the helical body **150_{B}**, i.e. the terminal end of the helical body **150_{B}** proximal to the front end of the screw shaft 150s, such an amount of contaminants can exert a pushing action - in the sense of a reaction force exerted by the contaminants on the lower end of the helical body **150_{B}** in reaction to the pushing action exerted by the front end of the helical body **150_{B}** - such as to push the scraper device **150,** along the rotation axis **R,** away from the filter head **125.**

Therefore, in the exemplary embodiment, during rotation of the scraper device **150,** the scraper device **150** moves the removed filtered contaminants away from the main inlet chamber portion in a direction, hereinafter, action direction, **V_{A}** along the rotation axis **R,** and the pushing action is exerted along the rotation axis **R** in a direction, hereinafter, reaction direction **V_{R}** opposite to the action direction.

In the exemplary embodiment, the filter assembly **100** comprises a front end-of-stroke element **165_{F}** (visible in **Figures 1E** and **1G****)** associated with the front end of the screw shaft **150_{S},** for example, with a part of the front end of the latter. In the exemplary embodiment, in the normal operating condition of the filter assembly **100,** i.e., with the scraper device **150** in the rest position, as shown in **Figure 1E****,** the front end-of-stroke element **165_{F}** abuts or rests on the front guide element **160_{F}**.

As mentioned above, the normal operating condition corresponds to the case where the collection region **130_{R}** does not contain any contaminants, or the amount of contaminants present in the collection region **130_{R}** is not sufficient to cause the scraper device **150** to shift along the rotation axis **R,** in the reaction direction **V_{R}**.

In the exemplary embodiment, in the rest condition of the scraper device **150,** the front end of the helical body **150_{B}** is at least partially within the collection region **130_{R}**, i.e., it is at least partially in the volume enclosed by the filter base **130.** It is particularly advantageous to provide a scraper device **150** which, when mounted in the filter assembly **100** and in the condition in which the collection region **130_{R}** is empty, i.e., it does not contain contaminants, extends inside the collection region for a length, measured along the rotation axis **R,** of between 1 mm and 10 mm, preferably between 1 mm and 5 mm.

According to a further sizing procedure of the scraper device **150,** its shape can be defined in such a way that, when the scraper device **150** is mounted in the filter assembly **100,** and in the condition in which the collection region **130_{R}** is empty, i.e., it does not contain contaminants, the volume occupied by the scraper device **150,** within the collection region **130_{R}**, is between 5% and 25% of the volume of the collection region **130_{R}**, preferably between 5% and 15% of the volume of the collection region **130_{R}**, more preferably between 5% and 10% of the volume of the collection region **130_{R}**. The different size ranges or percentage ranges defined above for the linear penetration of the scraper device **150** within the collection region **130_{R}** or for the percentage of occupation of the volume of the collection region **130_{R}** by the scraper device **150,** can be adopted, in embodiments, discussed below, which provide for the use of systems for sensing the movement or translation of the scraper device **150** along the rotation axis **R** caused by the accumulation of contaminants in the collection region **130_{R}**, based on a desired detection sensitivity of the sensing systems.

In the exemplary embodiment, the filter assembly **100** includes a rear end-of-stroke element **165_{R}** (visible in **Figures 1E** and **1G****).** In the exemplary embodiment, in the emergency operating condition of the filter assembly **100,** i.e., with the scraper device **150** in the shifted position, as shown in **Figure 1G****,** an enlargement portion **170,** discussed below, integral with the screw shaft **150_{S},** abuts, or rests, on the rear end-of-stroke element **165_{R}**, and the front end-of-stroke element **165_{F}** is spaced apart from the front guide element **165_{F}**.

As mentioned above, the emergency operating condition corresponds to the case where the collection region **130_{R}** contains an amount of contaminants sufficient to cause the scraper device **150** to shift along the rotation axis **R,** in the reaction direction of **V_{R}**.

Without loss of generality, the amount of contaminants accumulated in the collection region **130_{R}** required to push the scraper device **150** along the rotation axis **R,** in the reaction direction **V_{R}**, may depend on one or more of the following geometric parameters:
- shape and/or size of the collection region **130_{R}** (i.e., of the **130** filter base);
- shape and/or size of the scraper device **150,** and in particular of the front end of the helical body **150_{B};**
- the distances between the bottom of the collection region **130_{R}** and the front end of the helical body **150_{B}.**

In the exemplary embodiment, the collection region **130_{R}** is shaped in such a way as to permit an accumulation of contaminants that initially occurs along peripheral portions of the filter base **130** which are distant, or relatively distant (in essentially all directions), from the front end of the helical body **150_{B}**, such that initially no pushing action on the scraper device **150** arises. In this exemplary embodiment, the pushing action on the scraper device **150** occurs essentially following a sufficient accumulation of contaminants in the collection region **130_{R}**, and such that the accumulated mass of contaminants actually reaches the lower end of the helical body **150_{B}.**

In alternative embodiments, the collection region **130_{R}** and/or the scraper device **150** are shaped in such a way that the scraper device **150** is subjected to a pushing action as soon as there are contaminants in the collection region **130_{R}**. In such embodiments, the scraper device **150** may for example be equipped with a helical body **150_{B}** extending, in the rest position, to the bottom of the collection region **130_{R}**, for example until it touches, or grazes, the bottom of the collection region **130_{R}**.

Without loss of generality, the amount of contaminants accumulated in the collection region **130_{R}** necessary to cause the translation of the scraper device **150** may be influenced by one or more of the following characteristics of the accumulated contaminants:
- size of the contaminant particles;
- shape of the contaminant particles;
- overall shape of the accumulated mass of contaminants;
- degree of compactness of the mass of accumulated contaminants;
- moisture absorbed by contaminants;
- presence of encrusted portions in the mass of accumulated contaminants.

For example, the mass of contaminants accumulated in the collection region **130_{R}** may not be able to exert a sufficient reaction for a pushing action on the scraper device **150,** if such mass were not sufficiently compact. For this reason, before the mass of contaminants accumulated in the collection region **130_{R}** can be able to push the scraper device **150,** it may be necessary for a greater quantity of contaminants to accumulate in the collection region **130_{R}**, and for their subsequent compaction, for example exerted by the scraper device **150,** and in particular by means of the action exerted by the helical body **150_{B}**, in the action direction **V_{A}**, on the mass of accumulated contaminants.

The pushing action exerted by the contaminants accumulated in the collection region **130_{R}** on the scraper device **150** can generally vary over time due to the variation in the shape of the mass of contaminants accumulated in the collection region **130_{R}**. Such variation can be caused not only by the introduction of new contaminants removed from the main filtering surface portion, but also due to the interaction between the helical body **150_{B}** and the mass of contaminants accumulated in the collection region **130_{R}** (in fact, during the rotation of the scraper device **150,** a mixing of the previously accumulated contaminants might take place).

Furthermore, the degree of compactness/hardness of the mass of contaminants accumulated in the collection region **130_{R}** - and therefore the ability of the latter to exert a pushing action on the scraper device **150** - can be influenced by the humidity absorbed by the mass of contaminants due to the passage of the fluid of the washing appliance within the filter element **105.**

In the exemplary embodiment, the filter assembly **100** comprises a pushing element associated with the scraper device **150** and configured to control the pushing action exerted on the scraper device **150** by the contaminants accumulated in the collection region **130_{R}**, in particular to contrast the pushing action of the contaminants accumulated in the collection region **130_{R}**.

In the exemplary embodiment, the pushing element comprises a spring **SE.**

In the exemplary embodiment, the spring **SE** is positioned inside the transmission mechanism 155.

In the exemplary embodiment, the spring **SE** is positioned at least partially inside the rear guide element **160_{R}**, coaxially with the scraper device **150,** and in particular coaxially with the screw shaft **150_{S}.**

In the exemplary embodiment, the spring **SE** is arranged to contact the rear end of the screw shaft **150_{S}.** In the exemplary embodiment, the spring **SE** is arranged around a drive shaft, not shown, of the transmission mechanism **155.**

In the exemplary embodiment, when the scraper device **150** is in the rest position **(****Figure 1E****),** the pushing action exerted by the spring **SE,** in the action direction **V_{A}**, on the scraper device **150** is such as to keep the front end-of-stroke element **160_{F}** firmly abutting the front guide element **165_{F}**. This allows to avoid, or significantly reduce, unwanted oscillations of the scraper device **150** along the rotation axis **R,** which would make any sensing of the position of the scraper device **150** (for example, by suitable sensing systems , discussed below) inefficient.

Therefore, in the exemplary embodiment, in order for the scraper device **150** to move from the rest position **(****Figure 1E****)** to the shifted position **(****Figure 1G****),** the pushing action exerted by the contaminants accumulated in the collection region **130_{R}** must be sufficiently high to overcome the counter pushing action exerted by the spring **SE.**

In the exemplary embodiment, the filter assembly **100** includes a fluid connection device for selectively enabling and disabling a fluid connection between the main inlet chamber portion **110_{M}** and the auxiliary inlet chamber portion **110_{A}**. For purposes of this discussion, "fluid connection" means the fluid connection, i.e., the ability or capacity of the fluid to pass or flow, between the main inlet chamber portion **110_{M}** and the auxiliary inlet chamber portion **110_{A}**.

In the exemplary embodiment, the fluid connection device is movable together with the scraper device **150,** and it is configured to enable fluid connection when the scraper device **150** is in the shifted position, thereby allowing fluid to flow from the inlet **IN** to the auxiliary inlet chamber portion **110_{A}** through the main inlet chamber portion **110_{M}** and be filtered by the auxiliary filtering surface portion, and disable fluid connection when the scraper device **150** is in the rest position, thereby causing fluid separation between the main inlet chamber portion **110_{M}** and the auxiliary inlet chamber portion **110_{A}**, and allowing fluid to be filtered by the main filtering surface portion.

In the exemplary embodiment, the auxiliary inlet chamber portion **110_{A}** is configured to receive fluid to be filtered from the inlet **IN** only when the fluid connection is enabled (by the fluid connection device).

In the exemplary embodiment, the fluid connection device is configured to allow fluid connection in the presence of at least partial filling of the collection region **130_{R}**. This condition, as discussed above, causes the shift of the scraper device **150** and substantially establishes the impossibility of accumulating in the collection region **130_{R}** further contaminants possibly removed from the main filtering surface portion, thus allowing the unfiltered fluid present in the main inlet chamber **110_{M}** to reach the auxiliary inlet chamber portion **110_{A}** and flow to the outlet **OUT** through the auxiliary filtering surface portion, and through the main filtering surface portion, as long as the latter is not clogged.

In the exemplary embodiment, the shift of the scraper device **150** is indicative of a condition of at least partial filling of the collection region **130_{R}**, therefore it is possible to foresee that the enabling of the fluid connection between the main inlet chamber portion **110_{M}** and the auxiliary inlet chamber portion **110_{A}** will result, at least initially, in the filtering of the fluid through both the main filtering surface portion and the secondary filtering surface portion, for example because, at the enabling of the fluid connection, the scraper device **150** may have recently concluded a cycle of removal of contaminants from the main filtering surface portion.

The use of the auxiliary inlet chamber portion **110_{A}** allows, especially but not exclusively, in conditions of clogging of the main filtering surface portion, to reduce the fluid pressure inside the main inlet chamber portion **110_{M},** a pressure that could otherwise compromise the seal of the filter base **130.**

The use of the auxiliary inlet chamber portion **110_{A}** also allows to continue to guarantee, at least temporarily, and in particular as long as the auxiliary inlet chamber portion **110_{A}**, or the portion of the auxiliary filtering surface associated therewith, is not clogged, the filtering of the fluid received from the inlet **IN** even when the main inlet chamber portion **110_{M}** is clogged.

In the exemplary embodiment, the auxiliary inlet chamber portion **110_{A}** has a volume that allows the filtering of a quantity of fluid sufficient to complete a washing cycle of the washing appliance. In this way, even if the clogging of the main inlet chamber portion **110_{M}** occurs in an initial phase of a washing cycle of the washing appliance, such washing cycle can be concluded while at the same time ensuring the filtering of the fluid.

In the exemplary embodiment, the fluid connection device is configured to close the connection opening **140_{H}** when the scraper device **150** is in the rest position and open the connection opening **140_{H}** when the scraper device **150** is in the shifted position.

In the exemplary embodiment, the screw shaft **150_{S}** is movable along the rotation axis **R** passing through the connecting opening **140_{H}**.

In the exemplary embodiment, the fluid connection device comprises an enlargement portion **170** adapted to cause an enlargement, or, in the intended use orientation, an extension along the transverse direction **Y,** of the screw shaft **150_{S}.** Without loss of generality, the enlargement portion **170** may be made in a single piece with the screw shaft **150_{S},** or the enlargement portion **170** may be a component separate from the screw shaft **150_{S}** and fixed thereto by suitable fastening means.

In the exemplary embodiment, the fluid connection device is configured to fit, at least partially, into the connection opening **140_{H}** when the scraper device **150** is in the rest position, as exemplarily illustrated in **Figure 1E****.**

In the exemplary embodiment, the enlargement portion **170,** or, more generally, the fluid connection device, comprises a sealing element **170_{G}** for sealing the connection opening **140_{H}** when the scraper device **150** is in the rest position. By way of example, as shown, the sealing element **170_{G}** may comprise a gasket. By way of a further example, not shown, the sealing element **170_{G}** may comprise a labyrinthine structure adapted to provide a labyrinth seal.

In alternative embodiments, not shown, the fluid connection device is configured to externally cover the connection opening **140_{H}**, i.e. to plug the connection opening **140_{H}** without insertion of the fluid connection device therein, when the scraper device **150** is in the rest position.

In the exemplary embodiment, the filter assembly **100** includes a bypass apparatus **175** adapted to allow the unfiltered fluid to escape from the filter assembly **100** in conditions of clogging of the main filtering surface portion and the auxiliary filtering surface portion, or, more generally, when a reduced overall filtration efficiency of the main filtering surface portion and the auxiliary filtering surface portion causes the filtration of a quantity of fluid that is less than the quantity of fluid entering the inlet chamber **110,** with consequent potential accumulation of unfiltered fluid in the inlet chamber **110** and subsequent overflow of the same.

In the exemplary embodiment, the bypass apparatus **175,** or, more generally, the filter assembly **100,** comprises a bypass housing **175_{H}** separated from the filter housing **115,** e.g. arranged next to it along the transverse direction **Y.**

In the exemplary embodiment, the bypass apparatus **175,** or, more generally, the filter assembly **100.** comprises a bypass chamber **175c** separated from the inlet chamber **110** and in fluid connection with the outlet chamber **120.**

In the exemplary embodiment, the bypass chamber **175_{C}** is in selective fluid connection with the inlet chamber **110,** in particular with the auxiliary inlet chamber portion **110_{A}**.

In the exemplary embodiment, the bypass apparatus **175,** or, more generally, the filter assembly **100,** includes a fluid communication device configured to enable fluid communication between the auxiliary inlet chamber portion **110_{A}** and the bypass chamber **175_{C}** based on a condition of the inlet chamber **110,** for example, the pressure of the fluid contained in the inlet chamber **110,** and in particular in the auxiliary inlet chamber portion **110A.** For the purposes of this disclosure, "fluid communication" means the fluid connection, i.e., the ability or capacity of fluid to pass or flow, between the auxiliary inlet chamber portion **110_{A}** and the bypass chamber **175_{C}.**

In the exemplary embodiment, the fluid communication device is configured to enable fluid communication in the presence of a clogging of the auxiliary inlet chamber portion **110A,** or, more generally, in the presence of an accumulation of unfiltered fluid due to, for example, a reduced overall filtration efficiency of the main filtering surface portion and the auxiliary filtering surface portion, thereby allowing unfiltered fluid to flow to the outlet **OUT** through the main inlet chamber portion **110_{M},** the auxiliary inlet chamber portion **110_{A}**, and the bypass chamber **175_{C}.** This helps to avoid interruption of fluid flow by the clogged filter assembly **100,** thereby preventing corresponding malfunctioning of the washing appliance. Furthermore, this helps to avoid overflow of fluid from the filter assembly **100,** and possible flooding of the room in which the washing appliance is located.

In the exemplary embodiment, the fluid connection device includes a movable body **175_{B}** configured to take a closed position or an open position to disable or enable, respectively, fluid communication. In the exemplary embodiment, in the closed position **(****Figure 1F****),** the movable body **175_{B}** closes a communication opening (not shown) formed in a partition wall **175_{W}** that separates the auxiliary inlet chamber portion **110_{A}** from the bypass chamber **175_{C},** while in the open position (not shown) the movable body **175_{B}** opens the communication opening.

In the exemplary embodiment, the movable body **175_{B}** is positioned above the communication opening, and is movable with respect to the bypass housing **175_{H}** along the vertical direction **Z.**

In the exemplary embodiment, the movable body **175_{B}** takes the open position by moving upwards, freeing the communication opening, due to the pressure exerted on the movable body **175 _{B}** by the fluid accumulated in the inlet chamber **110** , for example, as discussed above, when the inlet chamber **110** is in a clogged or partially clogged condition.

In the exemplary embodiment, the movable body **175 _{B}** takes the closed position, occluding the communication opening, when the pressure exerted on the movable body **175_{B}** by the accumulated fluid present in the inlet chamber **110** is not sufficient to overcome the gravitational force acting on the movable body **175_{B}**, that is, when the inlet chamber **110** is in a non-clogged or not particularly clogged condition.

In the exemplary embodiment, the filter assembly **100** includes a drain pump **P** adapted to drain fluid from the inlet chamber **110.** In the exemplary embodiment, the drain pump **P** is connected to the main inlet chamber portion **110_{M},** for example, to a bottom thereof, to suck up fluid, and to the outlet **OUT** of the filter assembly **100** (connection not shown) to evacuate the sucked fluid. Without loss of generality, the drain pump **P** may be operatively connected to a control unit of the washing appliance (discussed below), so as to activate the drain pump **P** and, therefore, to empty the inlet chamber **110,** in one or more phases of the treatment cycle performed by the washing appliance, for example, at the end of the washing phase. Alternatively or in addition to what is described above, the drain pump **P** can be operationally connected to one or more components of the filter assembly **100,** for example, to a sensing system and/or to an output system, discussed below, so as to activate the drain pump **P,** and, therefore, empty the inlet chamber **110,** upon the occurrence of one or more operating conditions of the filter assembly **100,** for example, a sensing and/or a notification of activation of the bypass device, following which the emptying of the collection region **130_{R}**, and possibly the cleaning of the filtering element **105,** can no longer be postponed. Emptying the inlet chamber **110** allows the filter base **130,** and possibly the filtering element **105,** to be extracted without risking fluid leaks from the filter assembly **100.**

In the exemplary embodiment, the filter assembly **100** includes a sensing system.

In the exemplary embodiment, the filter assembly **100** comprises a sensing device **180_{A}** configured to determine or detect the enabling or disabling of fluid connection, i.e., fluid connection between main inlet chamber portion **110_{M}** and the auxiliary inlet chamber portion **110_{A}**. The sensing device **180_{A}** is shown in **Figures 1E** and **1G** by way of a schematic representation and in a general location within inlet chamber **110;** the specific location of sensing device **180_{A}** may depend, for example, from the type of detection device **180_{A}** and/or the parameters sensed by it.

In the exemplary embodiment, in addition to or as an alternative to the sensing device **180_{A}**, the sensing system includes a sensing device **180_{B}** configured to determine or sense the enabling or disabling of fluid communication, i.e., fluid connection between auxiliary inlet chamber portion **110A** and the bypass chamber **175c.** The sensing device **180_{B}** is shown in **Figure 1F** by way of a schematic representation and in a general location within the bypass chamber **175c;** the specific location of the sensing device **180_{B}** may depend, for example, on the type of sensing device **180_{B}** and/or on the parameters sensed by it.

Without loss of generality, the sensing device **180_{A}** and the bypass sensing device **180_{B}** can be made as a single sensing device.

Hereinafter, any feature, aspect, advantage or variation of, or associated with or referring to, the sensing system shall be deemed to apply to both the sensing device **180_{A}** and the sensing device **180_{B}**.

In the exemplary embodiment, the sensing device **180_{A}** is a position sensing device configured to sense the position of the scraper device **150** along the rotation axis **R** and/or the movable body **175_{B}** along the vertical direction **Z,** and to generate a corresponding (analog or digital) position signal indicative of the sensed position, and, hence, of the enabling or disabling of the corresponding fluid connection.

Without loss of generality, the position sensing device may comprise one or more magnetic position sensors, one or more capacitive position sensors, one or more inductive position sensors, one or more optical position sensors, and/or one or more piezoelectric position sensors, and/or one or more devices equipped with encoders or potentiometers.

Considering, by way of example only, a magnetic position sensor, the magnetic position sensor may comprise one or more magnetic elements integral with, or movable together with, the movable component, for example, the scraper device **150** or the movable body **175_{B}**, and a fixed sensor element configured to measure the intensity of the magnetic field generated by the magnetic elements and to generate the position signal based on the measured magnetic field strength; the measured generated magnetic field strength can depend on the distance between the magnetic elements and the sensing element, and therefore on the amount of displacement of the moving component compared to its resting position.

In the exemplary embodiment, the filter assembly **100** includes an output system **185** for providing output information.

The output system **185** is shown in **Figures 1E** and **1G** by way of a schematic representation and in a general position within the inlet chamber **110,** the specific position of the outlet system **185** depending, for example, on the type of the output system, and/or on the type of output information provided, and/or on the manner in which the output information is made available.

In the exemplary embodiment, the output information comprises fill information relating to a fill state of the collection region **130_{R}**.

In the exemplary embodiment, the fill information is provided in response to the sensing system determining whether fluid connection is enabled, as in the case of the sensing device **180_{A},** and/or fluid communication is enabled, as in the case of sensing device **180_{B}.**

In the exemplary embodiment, the output system **185** is configured to provide output information based on the generated position signal from the position sensing device.

Without losing generality, the output information may include one or more of:
- a quantitative indication of the filling of the collection region **130_{R}**, for example, the volume of contaminants accumulated in the collection region **130_{R}**, such quantitative indication being for example calculated or estimated on the basis of the extent of the shift of the scraping device **150;**
- a qualitative indication of the filling of the collection region **130_{R}**, for example, in terms of predefined levels such as "empty", "half full", "full", such qualitative indication being for example calculated or estimated on the basis of the extent of translation of the scraper device **150;**
- an indication of the need to empty the collection area **130_{R}**.

Without loss of generality, the output information may be provided in the form of visual and/or acoustic indications, for example by activating optical and/or acoustic signaling elements, for example warning lights and/or beeps (not shown), and/or in the form of text messages and/or symbols displayed on a display element, for example a screen (not shown).

Without loss of generality, the output information may be provided in the form of a signal (digital or analog) to an external device, such as a smartphone (not shown), or a washing equipment control unit (discussed below) to which the filter assembly **100** is hydraulically connected or connectable.

In alternative embodiments, not shown, the output system **185** is external to the filter assembly **100.** For example, the output system **185** may be integrated into the washing appliance, and be communicatively coupled to the sensing system, such as by a wired and/or wireless communications interface.

In the exemplary embodiment, the filter assembly **100** is configured to be freely positioned by the user in proximity to the washing appliance. In the exemplary embodiment, the filter assembly **100** may be positioned on the floor or on the washing appliance, possibly by means of a suitable fixing support (not shown). In alternative embodiments, not shown, the filter assembly **100** may be mounted on the wall, for example by means of a suitable mounting support (not shown).

In further embodiments, not shown, the filter assembly **100** may be an internal component of the washing appliance.

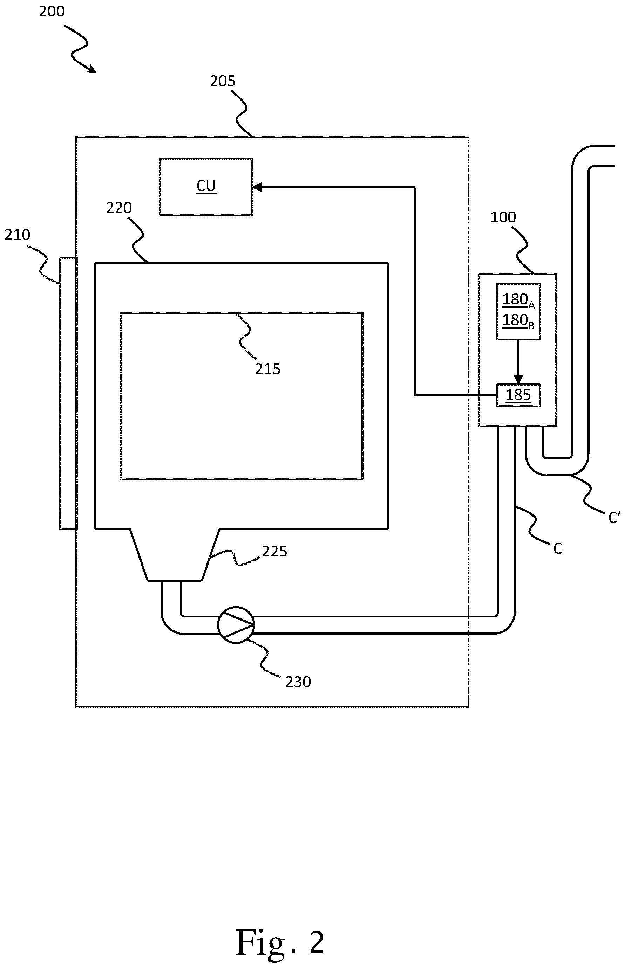

**Figure 2** schematically shows an example of a connection between a filter assembly, such as the filter assembly **100** illustrated in **Figures 1A** - **1G****,** and a washing appliance **200,** in particular a laundry or textile articles washing appliance, and more specifically a washing machine.

In the exemplary embodiment, the washing appliance **200** comprises a casing **205,** substantially shaped as a parallelepiped, containing hydraulic, electrical, mechanical, electronic and electromechanical components necessary for the operation of the washing appliance **200.** In **Figure 2****,** only the components necessary for understanding the installation of the filter assembly **100** and its use are illustrated.

In the exemplary embodiment, a door **210** provided on a front side of the casing **205** allows selective access to a rotating perforated basket **215,** for example of a substantially cylindrical shape, configured to receive textile products (for example, clothes) to be treated, for example to be washed or to be washed and dried.

In the exemplary embodiment, the rotating basket **215** is housed in a washing tub **220,** for example of a substantially hollow cylindrical shape, configured to receive fluids comprising water and/or water mixed with chemical treatment agents for textile products (for example, detergents, fabric softeners, dyes, stain removers, ...).

In the exemplary embodiment, the washing tank **220** comprises, for example in a bottom portion thereof, a sump **225** configured to collect by gravity the fluids introduced into the washing tub **220.**

In the exemplary embodiment, the washing appliance **200** includes a drain system for discharging fluid collected in the sump **225** into a drain external to the washing appliance **200.**

In the exemplary embodiment, such discharge system includes a discharge pump **230** in fluid connection with the sump and configured, when operated, to move fluid collected in the sump **225** to a conduit such as conduit **C** illustrated in **Figure 1A****.**

In the exemplary embodiment, the conduit **C** is connected to the inlet **IN** of filter assembly **100** to supply fluid (to be filtered) pumped through conduit **C** into the filtering element **105;** the fluid filtered by the filter assembly **100** is then supplied, through the outlet **OUT,** to the conduit **C'** to be discharged into a drain external to the washing appliance **200** (not illustrated).

In the exemplary embodiment, as mentioned above, the output information generated by the output system **185** of the filter assembly **100** may be advantageously provided (in the form of a digital or analog signal) to a control unit **CU** of the washing appliance **200,** for example by means of a wired and/or wireless communication interface.

In alternative embodiments, not shown, the output system **185** may instead be provided in the washing appliance **200.** In such embodiments, the output system **185** may be coupled to the sensing system of the filter assembly **100,** for example via wired and/or wireless communication interface, to receive from it the corresponding position signal, and to the control unit **CU,** to provide the output information (in the form of an analog or digital signal) corresponding to the position signal.

In view of the above, the filter assembly **100** can be easily connected to any washing appliance **200** to provide it with the capability of filtering contaminants, such as, for example, microplastics, without having to carry out complex assembly operations. In fact, it is sufficient to connect the conduit **C** to the inlet **IN** of the filter assembly 100, to connect the conduit **C'** to the outlet **OUT** of the filter assembly **100,** and to communicatively couple, for example, by wiring or by wireless connection, the control unit **CU** with the sensing system (if present) of the filter assembly **100** and/or with the output system **185** (if present) of the filter assembly **100.**

In further embodiments (not shown), the output system **185** may be part of the control unit **CU** of the washing appliance **200.** In these embodiments, the control unit **CU** may be coupled to the sensing system of the filter assembly **100,** for example by wired and/or wireless communication interface, to receive the position signal.

In the exemplary embodiment illustrated in **Figure 2****,** the filter assembly **100** is connected in series to a drain system of the washing appliance **200** to filter the fluid discharged therefrom. In alternative embodiments (not shown), the filter assembly **100** may (additionally) be connected to a fluid recirculation system of the washing appliance **200** configured to recirculate the fluid collected in the sump **225** in the washing apparatus **200.**

While in the exemplary embodiment illustrated in **Figure 2** the filter assembly **100** is shown externally connected to the washing appliance **200,** similar considerations apply in the case where the filter assembly **100** is internally connected thereto, in particular in the case where the filter assembly **100** is installed to filter (at least) the fluid of a fluid recirculation system of the washing appliance **200.**

Of course, to meet local and specific needs, one skilled in the art may make numerous logical and/or physical modifications and alterations to the invention described above. More specifically, while the present invention has been described with a certain degree of particularity with reference to preferred embodiments thereof, it is to be understood that various omissions, substitutions, and modifications in form and detail as well as other embodiments are possible. In particular, various embodiments of the invention may also be practiced without the specific details set forth in the foregoing description to provide a more thorough understanding thereof; conversely, known features may have been omitted or simplified so as not to burden the description with unnecessary detail. Furthermore, it is expressly intended that specific elements and/or method steps described in connection with any disclosed embodiment of the invention may be incorporated into any other embodiment.

## Claims

1. Filter assembly **(100)** for filtering a fluid used in a laundry or textile articles washing appliance **(200),** the filter assembly comprising:
a filtering element **(105)** comprising a filtering surface and enclosing an inlet chamber **(110)** adapted to receive said fluid, the inlet chamber comprising a first inlet chamber portion **(110_{M})** associated with a first filtering surface portion of the filtering surface, and a second inlet chamber portion (**110_{A}**) selectively fluidly separated from the first inlet chamber portion and associated with a second filtering surface portion of the filtering surface;
a housing **(115)** adapted to house the filtering element;
an outlet chamber **(120)** defined by a volume comprised between the filtering element and the housing for receiving filtered fluid resulting from passage of the fluid from the inlet chamber through the filtering surface of the filtering element;
an inlet **(IN)** fluidly connected to said first inlet chamber portion, through which the fluid is supplied to the first inlet chamber portion;
an outlet **(OUT)** fluidly connected to said outlet chamber, through which the filtered fluid exits the outlet chamber;
a scraper device **(150)** operable to rotate about a rotation axis **(R)** for removing filtered contaminants from the first filtering surface portion during rotation of the scraper device, and to move the removed filtered contaminants away from the first inlet chamber portion;
a collection region (**130_{R}**) for collecting the filtered contaminants removed and moved away from the first inlet chamber portion, and
a fluid connection device **(170)** for selectively enabling and disabling a fluid connection between the first and second inlet chamber portions,
wherein:
the scraper device is movable with respect to the filtering element along the rotation axis from a rest position to a shifted position as a result of a pushing action exerted on the scraper device by the collected filtered contaminants, and
the fluid connection device is movable together with the scraper device and is configured to:
- enable said fluid connection when the scraper device is in the shifted position, thereby allowing the fluid to flow from the inlet to the second inlet chamber portion through the first inlet chamber portion and to be filtered by the second filtering surface portion, and
- disable said fluid connection when the scraper device is in the rest position thereby fluidly separating the first and second inlet chamber portions from each other and allowing the fluid to be filtered by the first filtering surface portion.

2. Filter assembly **(100)** according to claim 1, wherein the scraper device **(150)** comprises an endless screw comprising a shaft **(150_{S})** and a helicoidal body (**150_{B}**) surrounding the shaft and configured to mechanically interact with the first filtering surface portion.

3. Filter assembly **(100)** according to claim 1 or 2, wherein the filter assembly comprises a separation wall **(140)** for separating the first **(110_{M})** and second (**110_{A}**) inlet chamber portions from each other, and an aperture (**140_{H}**) formed in the separation wall, the fluid connection device **(170)** being configured to close the aperture when the scraper device **(150)** is in the rest position and to open the aperture when the scraper device **(150)** is in the shifted position.

4. Filter assembly **(100)** according to claim 2 or 3, wherein the shaft **(150_{S})** is movable along the rotation axis **(R)** by passing through the aperture (**140_{H}**), and wherein the fluid connection device **(170)** comprises a portion enlarging the shaft.

5. Filter assembly **(100)** according to any claim from 2 to 4, wherein the fluid connection device **(170)** comprises a sealing member (**170_{G}**), in particular a gasket, to sealingly close the aperture (**140_{H}**) when the scraper device **(150)** is in the rest position.

6. Filter assembly **(100)** according to any of the preceding claims, further comprising a pushing element **(SE)** configured to contrast the pushing action exerted on the scraper device **(150)** by the contaminants collected in the collection region (**130_{R}**).

7. Filter assembly **(100)** according to any of the preceding claims, wherein, during rotation of the scraper device **(150),** the scraper device moves the removed filtered contaminants away from the first inlet chamber portion **(110_{M})** in a first direction (**V_{A}**) along the rotation axis **(R),** said pushing action being exerted along the rotation axis in a second direction (**V_{R}**) opposite the first direction.

8. Filter assembly **(100)** according to any of the preceding claims, further comprising
a bypass chamber **(175_{C})** separated from the inlet chamber **(110)** and fluidly connected to the outlet chamber **(120,** and
a fluid communication device (**175_{B}**) configured to enable a fluid communication between the second inlet chamber portion (**110_{A}**) and the bypass chamber in presence of a clogging of the second filtering surface portion, thereby allowing unfiltered fluid passing through the first **(110_{M})** and second (**110_{A}**) inlet chamber portions to flow towards said outlet **(OUT).**

9. Filter assembly **(100)** according to any of the preceding claims, wherein at least one between the first and second filtering surface portions comprises a mesh having a size configured to retain particles having a minimum dimension comprised between 0,1µm and 5mm, preferably a minimum dimension comprised between 10µm and 100µm, more preferably a minimum dimension comprised between 10µm and 75 µm.

10. Filter assembly **(100)** according to any of the preceding claims, further comprising
a sensing device (**180_{A}**) configured to determine the enablement or the disablement of said fluid connection, and
an output arrangement **(185)** configured to provide output information comprising filling information about a filling status of the collection region (**130_{R}**), said filling information being in response to the determination by the sensing device of the enablement of said fluid connection.

11. Filter assembly **(100)** according to any of the preceding claims, wherein the first inlet chamber portion **(110_{M})** is arranged between the collection region (**130_{R}**) and the second inlet chamber portion (**110_{A}**).

12. A laundry or textile articles washing appliance **(200)** comprising:
- a control unit **(CU)** configured to control a laundry or textile articles treating operation of the appliance;
- a drain pipe **(C, C')** configured to drain fluid from a laundry or textile articles treating chamber **(215)** into a recirculation conduit to supply said fluid back to the laundry or textile articles treating chamber and/or into a drain outside the appliance;
- a filter assembly **(100)** according to any of the preceding claims, wherein the inlet **(IN)** of the filter assembly is fluidly connected to the drain pipe **(C)** and the outlet **(OUT)** of the filter assembly is fluidly connected to the recirculation conduit and/or the drain **(C').**

13. Method for operating a filter assembly according to claim from 1 to 11, the method comprising:
- operating the scraper device **(150)** to be rotated about the rotation axis **(R);**
- removing filtered contaminants from the first filtering surface portion during rotation of the scraper device;
- moving the removed filtered contaminants away from the first inlet chamber portion **(110_{M})** by means of the rotation of the scraper device;
- collecting the removed filtered contaminants moved away from the first inlet chamber portion in the collection region (**130_{R}**);
- enabling the fluid connection between the first inlet chamber portion **(110_{M})** and the second inlet chamber portion (**110_{A}**) thereby allowing the fluid to flow from the inlet **(IN)** to the second inlet chamber portion through the first inlet chamber portion and to be filtered by the second filtering surface portion, said enabling being caused by the scraper device moving from the rest position to the shifted position as a result of the pushing action exerted on the scraper device by the collected filtered contaminants.

14. Method according to claim 13, further comprising
- coupling the filter assembly **(100)** to a laundry or textile articles washing appliance **(200)** according to claim 12, said coupling comprising:
- fluidly connecting the inlet **(IN)** of the filter assembly to the drain pipe **(C)** of the appliance;
- fluidly connecting the outlet **(OUT)** of the filter assembly to the recirculation conduit to supply fluid back to the laundry or textile articles treating chamber **(215)** and/or connecting the outlet of the filter assembly to the drain **(C')** outside the appliance;
- communicatively coupling the control unit **(CU)** of the appliance to filter assembly.
